# EUROPEAN PATENT APPLICATION

(11) **EP 4 628 855 A1**
(43) Date of publication of application: **08.10.2025**
(21) Application number: 25161767.6
(22) Date of filing: 05.03.2025
(51) Int. Cl.: G01G 19/393

(54) **COMBINATION WEIGHING APPARATUS**

(30) Priority: 14.03.2024 JP 2024039566
(71) Applicant: Ishida Co., Ltd., Kyoto-shi Kyoto 606-8392 (JP)
(72) Inventor: KAMIGAITO, Satoru, Ritto-shi, Shiga, 520-3026 (JP); KISHIKAWA, Mikio, Ritto-shi, Shiga, 520-3026 (JP)
(74) Representative: Gill Jennings & Every LLP

(57) **Abstract**

In a combination weighing apparatus 1, a controller 40 specifies a radiation feeder 3₁ to 3ₙ being oversupplied with articles M on a basis of information acquired by an acquisition unit 30, and preferentially selects a hopper 5₁ to 5ₙ corresponding to the specified radiation feeder 3₁ to 3ₙ as a hopper from which the articles are to be discharged.

## Description

### TECHNICAL FIELD

The present invention relates to a combination weighing apparatus.

### BACKGROUND ART

Conventionally, there is known a technique in which a camera is disposed in an upper portion of a combination weighing apparatus and radiation feeders are driven and controlled on the basis of an article accumulation amount of each of the radiation feeders (see, for example, WO2015/108117 and JP 2013-250143 A).

### SUMMARY OF THE INVENTION

However, in the conventional art, unbalanced supply of the articles from a distribution table to the respective radiation feeders may cause a situation in which some of the radiation feeders are oversupplied with the articles whereas other radiation feeders are undersupplied with the articles for a long time.

Since such a situation readily leads to a combination failure, there is a problem that an operation rate of the combination weighing apparatus is lowered.

The present invention has been made in view of the above problem, and an object of the present invention is to provide a combination weighing apparatus which can be prevented from deterioration in operation rate.

A combination weighing apparatus according to an embodiment is summarized as including: a distribution unit that distributes articles around the distribution unit; a plurality of radiation feeders that is disposed around the distribution unit and supplies the articles conveyed from the distribution unit to a plurality of hoppers; the plurality of hoppers that is disposed corresponding to the plurality of radiation feeders and temporarily holds and discharges the articles directly or indirectly supplied from the plurality of radiation feeders; weight measurement units that each measure a weight of the articles held in a corresponding one of the plurality of hoppers; an acquisition unit that acquires information on an amount of the articles on the plurality of radiation feeders; and a controller that selects, out of the plurality of hoppers, a combination of hoppers from which the articles are to be discharged on a basis of the weights measured by the weight measurement units, wherein the controller specifies, out of the plurality of radiation feeders, a radiation feeder being oversupplied with the articles on a basis of the information acquired by the acquisition unit, and preferentially selects, out of the plurality of hoppers, a hopper corresponding to the specified radiation feeder as a hopper from which the articles are to be discharged.

A combination weighing apparatus according an embodiment is summarized as including: a distribution unit that distributes articles around the distribution unit; a plurality of radiation feeders that is disposed around the distribution unit and supplies the articles conveyed from the distribution unit to a plurality of hoppers; the plurality of hoppers that is disposed corresponding to the plurality of radiation feeders and temporarily holds and discharges the articles directly or indirectly supplied from the plurality of radiation feeders; weight measurement units that each measure a weight of the articles held in a corresponding one of the plurality of hoppers; an acquisition unit that acquires information on an amount of the articles on the plurality of radiation feeders; and a controller that selects, out of the plurality of hoppers, a combination of hoppers from which the articles are to be discharged on a basis of the weights measured by the weight measurement units, wherein the controller specifies, out of the plurality of radiation feeders, a radiation feeder being undersupplied with the articles on a basis of the information acquired by the acquisition unit, and preferentially selects, out of the plurality of hoppers, hoppers other than a hopper corresponding to the specified radiation feeder as hoppers from which the articles are to be discharged.

According to the present invention, it is possible to provide a combination weighing apparatus which can be prevented from deterioration in operation rate.

### BRIEF DESCRIPTION OF THE DRAWINGS

FIG. 1 is a diagram for describing an example of an overall configuration of a combination weighing apparatus according to an embodiment;
FIG. 2 is a diagram illustrating an example of a state of a distribution table of the combination weighing apparatus according to the embodiment photographed from above; and
FIG. 3 is a flowchart illustrating an example of an operation of the combination weighing apparatus according to the embodiment.

### DESCRIPTION OF EMBODIMENTS

Hereinafter, the present embodiment will be described in detail with reference to the attached drawings. In the following description of the drawings, the same or similar parts are denoted by the same or similar reference symbols. However, note that the drawings are schematic, and ratios of dimensions are different from actual ones. Therefore, specific dimensions and the like are determined in consideration of the following description. Moreover, there may be portions where dimensional relationships or proportions are different among the drawings. In this specification and the drawings, elements having substantially the same function and configuration are denoted by the same reference numerals to omit redundant description, and elements not directly related to the present invention are omitted.

### (First Embodiment)

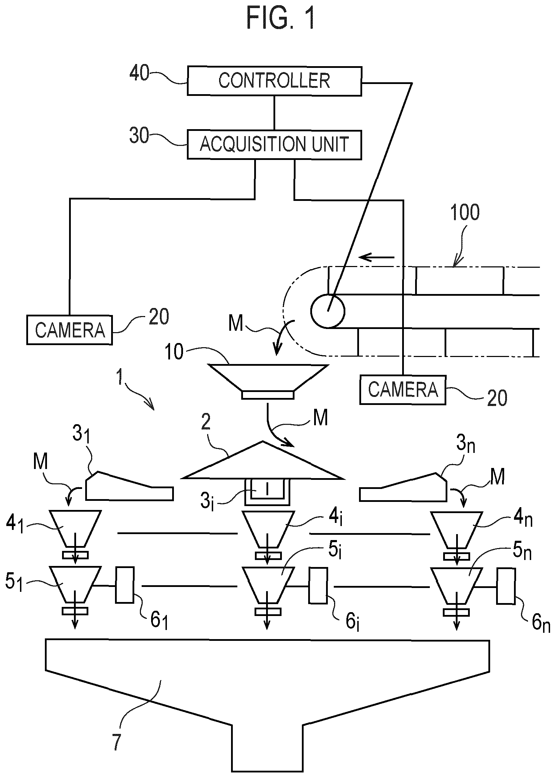

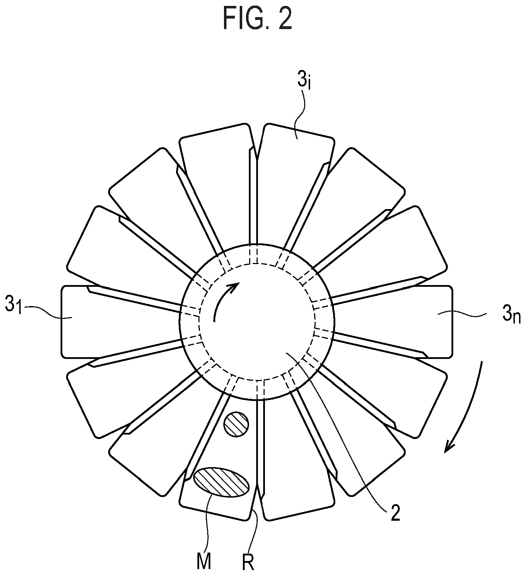

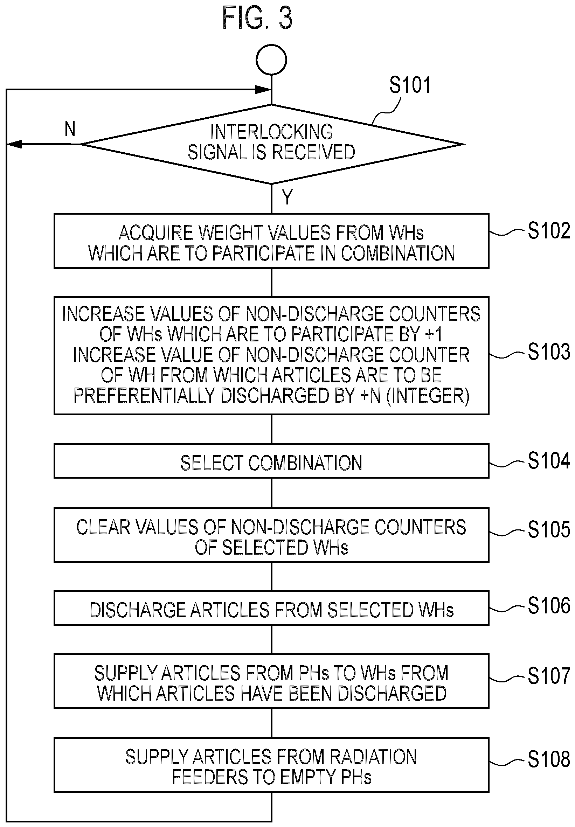

Hereinafter, a combination weighing apparatus 1 according to a first embodiment of the present invention will be described with reference to FIGS. 1 to 3. FIG. 1 is a diagram for describing an example of an overall configuration of the combination weighing apparatus 1 according to the first embodiment of the present invention, FIG. 2 is a diagram illustrating an example of a state of a distribution table 2 of the combination weighing apparatus 1 according to the first embodiment photographed from above, and FIG. 3 is a flowchart illustrating an example of an operation of the combination weighing apparatus 1 according to the first embodiment.

As illustrated in FIG. 1, the combination weighing apparatus 1 according to the present embodiment includes the distribution table 2, a plurality of radiation feeders 3 (3₁, 3ᵢ, and 3ₙ), a plurality of pool hoppers 4₁, 4ᵢ, and 4ₙ, a plurality of weighing hoppers 5₁, 5ᵢ, and 5ₙ, a camera 20, an acquisition unit 30, and a controller 40.

The distribution table 2 constitutes a distribution unit that distributes articles M around the distribution unit which are supplied from an external apparatus 100. The distribution table 2 may be a conical table configured to vibrate or a conical table 2 configured to rotate in a horizontal plane.

The radiation feeders 3 (3₁, 3ᵢ, and 3ₙ) are disposed around the distribution table 2 and supply the articles M conveyed from the distribution table 2 to the plurality of pool hoppers 4₁, 4ᵢ, and 4ₙ. Specifically, as illustrated in FIGS. 1 and 2, the radiation feeders 3₁, 3ᵢ, and 3ₙ are disposed substantially circumferentially below the distribution table 2 and around the distribution table 2. Furthermore, the radiation feeders 3₁, 3ᵢ, and 3ₙ each may be a vibration feeder that advances the articles M on the trough with an electromagnetic vibrator and a parallel plate spring, or a belt conveyor.

The pool hoppers 4₁, 4ᵢ, and 4ₙ are provided corresponding to the plurality of radiation feeders 3₁, 3ᵢ, and 3ₙ, respectively, and receive and store the articles M supplied from the plurality of radiation feeders 3₁, 3ᵢ, and 3ₙ.

The weighing hoppers 5₁, 5ᵢ, and 5ₙ are disposed corresponding to the plurality of radiation feeders 3₁, 3ᵢ, and 3ₙ, and temporarily hold and discharge the articles M supplied from the plurality of radiation feeders 3₁, 3ᵢ, and 3ₙ directly or indirectly via the pool hoppers. The articles M may be directly supplied from the radiation feeders 3₁, 3ᵢ, and 3ₙ to the weighing hoppers 5₁, 5ᵢ, and 5ₙ without the pool hoppers.

Weight measurement units 6₁, 6ᵢ, and 6ₙ measure the weights of the articles M held in the weighing hoppers 5₁, 5ᵢ, and 5ₙ, respectively.

A collective chute 7 has a funnel shape, and receives through its upper opening the articles discharged from the discharge gates of all of the weighing hoppers 5₁, 5ᵢ, and 5ₙ selected and combined, and supplies the articles downward while collecting them.

The controller 40 selects a combination of the weighing hoppers 5₁, 5ᵢ, and 5ₙ from which the articles M are to be discharged on the basis of the weights of the articles M measured by the weight measurement units 6₁, 6ᵢ, and 6ₙ.

As illustrated in FIG. 2, the camera 20 images a region R on each of the radiation feeders 3₁, 3ᵢ, and 3ₙ where the articles M are conveyed. Note that one or a plurality of cameras 20 may be provided. For example, two cameras 20 may complement each other to image the region R on all of the radiation feeders 3₁, 3ᵢ, and 3ₙ where the articles M are conveyed.

The acquisition unit 30 acquires information on the amount of articles on the plurality of radiation feeders 3₁, 3ᵢ, and 3ₙ. For example, the acquisition unit 30 may acquire the proportion of the area occupied by the articles M (shaded region in FIG. 2) in the area of the above-described region R as the above-described information on the basis of the image captured by the camera 20.

Here, the controller 40 specifies a radiation feeder being oversupplied with the articles M on the basis of the information acquired by the acquisition unit 30, and preferentially selects the weighing hopper 5₁, 5ᵢ, or 5ₙ corresponding to the specified radiation feeder 3₁, 3ᵢ, or 3ₙ as a weighing hopper from which the articles M are to be discharged.

For example, the controller 40 may specify the radiation feeder 3₁, 3ᵢ, or 3ₙ having the above-described proportion exceeding a first threshold as the radiation feeder 3₁, 3ᵢ, or 3ₙ being oversupplied with the articles M.

Hereinafter, an example of the operation of the combination weighing apparatus 1 (controller 40) according to the present embodiment will be described with reference to FIG. 3.

As illustrated in FIG. 3, when receiving an interlocking signal from a device provided downstream such as a packaging device in step S101, the controller 40 acquires weight values of the held articles M from the weighing hoppers 5₁, 5ᵢ, and 5ₙ which are to participate in the combination in step S102.

Here, the controller 40 determines whether or not the hopper is to participate in the combination on the basis of whether or not a stability flag indicating the stability of the weight value is set. That is, the controller 40 determines the weighing hoppers 5₁, 5ᵢ, and 5ₙ whose stability flags are set as the weighing hoppers 5₁, 5ᵢ, and 5ₙ which are to participate in the combination, and acquires the weight values from the weighing hoppers 5₁, 5ᵢ, and 5ₙ.

In step S103, the controller 40 increases by 1 the value of a non-discharge counter of each of the weighing hoppers 5₁, 5ᵢ, and 5ₙ to participate in the combination, and increases by N the value of the non-discharge counter of the weighing hopper 5₁, 5ᵢ, or 5ₙ which is to be preferentially selected. Here, N may take any value greater than 1.

In step S104, the controller 40 selects a combination of the weighing hoppers 5₁, 5ᵢ, and 5ₙ from which the articles M are to be discharged on the basis of the weights of the articles M acquired in step S102.

Here, in a combination calculation, the controller 40 may store in a memory each combination of the weighing hoppers 5₁, 5ᵢ, and 5ₙ having the total weight of articles M stagnating thereon falling within a range from a lower limit to an upper limit, and select a combination including a weighing hopper 5₁, 5ᵢ, or 5ₙ having the largest value of the non-discharge counter among the combinations of the weighing hoppers 5₁, 5ᵢ, and 5ₙ stored in the memory when the storage of all the combinations of the weighing hoppers 5₁, 5ᵢ, and 5ₙ is completed. With this process, it is possible to increase the probability that the article M is discharged from the weighing hopper 5₁, 5ᵢ, or 5ₙ whose value of the non-discharge counter is increased to be preferentially selected.

For example, in a case where two combinations of weighing hoppers Nos. 1, 4, 6, and 10 and weighing hoppers Nos. 2, 4, 7, and 8 are stored in the memory as the combination of the weighing hoppers falling within the range from the lower limit to the upper limit, and the value of the non-discharge counter of the weighing hopper No. 6 is the largest, the controller 40 may select the combination including the weighing hopper No. 6.

In addition, in a case where the value of the non-discharge counter of the weighing hopper No. 4 is the largest, the controller 40 may select the combination of weighing hoppers having a total value of the weights of the held articles M being the closest to a target weight from among the two combinations each including the weighing hopper No. 4.

Alternatively, in the combination calculation, the controller 40 may select a combination of the weighing hoppers 5₁, 5ᵢ, and 5ₙ having the total value of the weights of the articles M falling within the range from the lower limit to the upper limit from among combinations each necessarily including the weighing hopper 5₁, 5ᵢ, or 5ₙ designated to be preferentially selected.

In step S105, the controller 40 clears the values of the non-discharge counters of the selected weighing hoppers 5₁, 5ᵢ, and 5ₙ, and increases by 1 the values of the non-discharge counters of the unselected weighing hoppers 5₁, 5ᵢ, and 5ₙ.

In step S106, the controller 40 causes the selected weighing hoppers 5₁, 5ᵢ, and 5ₙ to discharge the articles M.

In step S107, the controller 40 causes the pool hoppers 4₁, 4ᵢ, and 4ₙ to supply articles M to the weighing hoppers 5₁, 5ᵢ, and 5ₙ that have discharged the articles M.

In step S108, the controller 40 causes the radiation feeders 3₁, 3ᵢ, and 3ₙ to supply articles M to the empty pool hoppers 4₁, 4ᵢ, and 4ₙ.

According to the present embodiment, the radiation feeder 3₁, 3ᵢ, or 3ₙ having a large proportion of the articles M on the radiation feeder 3₁, 3ᵢ, or 3ₙ is detected on the basis of the image captured by the camera 20, and the weighing hopper 5₁, 5ᵢ, or 5ₙ corresponding to the detected radiation feeder 3₁, 3ᵢ, or 3ₙ is preferentially selected to be combined so that the article M is discharged early from the weighing hopper 5₁, 5ᵢ, or 5ₙ. Therefore, it is possible to prevent the articles M on the radiation feeders 3₁, 3ᵢ, and 3ₙ to be excessively unbalanced by positively reducing the oversupplied articles M on the radiation feeder 3₁, 3ᵢ, or 3ₙ.

### (Second Embodiment)

Hereinafter, a combination weighing apparatus 1 according to a second embodiment of the present invention will be described focusing on differences from the combination weighing apparatus 1 according to the first embodiment described above.

In the present embodiment, the controller 40 specifies a radiation feeder 3₁, 3ᵢ, or 3ₙ being undersupplied with the articles M on the basis of the above-described information acquired by the acquisition unit 30, and preferentially selects the weighing hoppers 5₁, 5ᵢ, and 5ₙ corresponding to other radiation feeders 3₁, 3ᵢ, and 3ₙ than the specified radiation feeder 3₁, 3ᵢ, or 3ₙ as weighing hoppers from which the articles M are to be discharged.

For example, the controller 40 may specify the radiation feeder 3₁, 3ᵢ, or 3ₙ having a smaller proportion of the articles M on the radiation feeder 3₁, 3ᵢ, or 3ₙ than a second threshold as the radiation feeder 3₁, 3ᵢ, or 3ₙ being undersupplied with articles M.

According to the present embodiment, the radiation feeder 3₁, 3ᵢ, or 3ₙ having a small proportion of the articles M on the radiation feeder 3₁, 3ᵢ, or 3ₙ is detected on the basis of the image captured by the camera 20, and the weighing hoppers other than the weighing hopper 5₁, 5ᵢ, or 5ₙ corresponding to the detected radiation feeder 3₁, 3ᵢ, or 3ₙ are preferentially selected and combined. With this process, the weighing hopper 5₁, 5ᵢ, or 5ₙ corresponding to the radiation feeder 3₁, 3ᵢ, or 3ₙ having a small amount of articles M is not selected for the combination and thus the articles M remain stored in the weighing hopper 5₁, 5ᵢ, or 5ₙ. Therefore, the radiation feeder 3₁, 3ᵢ, or 3ₙ having a small amount of articles M corresponding to the weighing hopper 5₁, 5ᵢ, or 5ₙ that does not discharge any article M is newly supplied with articles M from the distribution table 2 and therefore accumulates an equal amount of articles M relative to the other radiation feeders 3₁, 3ᵢ, and 3ₙ.

### (First Modification)

Hereinafter, a combination weighing apparatus 1 according to a first modification of the present invention will be described focusing on differences from the combination weighing apparatus 1 according to the first embodiment described above.

In the first modification, the acquisition unit 30 may extract color information specific to the article M for comparison with the region R on the radiation feeders 3₁, 3ᵢ, and 3ₙ where the articles M are conveyed to acquire the proportion of the area occupied by the articles M in the area of the region R.

For example, the acquisition unit 30 may convert an image (RGB data) captured by the camera 20 into HSV data and extract a hue specific to the article M.

According to such a configuration, the above-described proportion can be acquired more accurately, since the regions R on the radiation feeders 3₁, 3ᵢ, and 3ₙ where the articles M are conveyed are formed of a colorless member such as stainless steel.

With respect to a radiation feeder 3₁, 3ᵢ, or 3ₙ the region R of which is not entirely seen from the camera 20 due to a cross feeder, a support frame of a gate, or the like, the controller 40 may employ a predicted value, such as an average value of the above-described proportions of the radiation feeders on both sides, as the above-described proportion.

Alternatively, the controller 40 may acquire the above-described proportion from data on the basis of the view in the image captured by the camera 20.

Although the present invention is explained in detail using the above-mentioned embodiments, it will be apparent to those skilled in the art that the present invention is not limited to the embodiments described herein. The present invention can be implemented as modifications and changes without departing from the spirit and scope of the present invention defined by the description of the claims. Accordingly, the description of the present specification is for the purpose of illustration and is not intended to limit the present invention in any way.

### REFERENCE SIGNS LIST

- 1: Combination weighing apparatus
- 2: Distribution table (Distribution unit)
- 3₁, 3ᵢ, 3ₙ: Radiation feeder
- 4₁, 4ᵢ, 4ₙ: Pool hopper
- 5₁, 5ᵢ, 5ₙ: Weighing hopper
- 6₁, 6ᵢ, 6ₙ: Weight measurement unit
- 20: Camera
- 30: Acquisition unit
- 40: Controller
- 100: External apparatus
- M: Article

## Claims

1. A combination weighing apparatus comprising:
a distribution unit that distributes articles around the distribution unit;
a plurality of radiation feeders that is disposed around the distribution unit and supplies the articles conveyed from the distribution unit to a plurality of hoppers;
the plurality of hoppers that is disposed corresponding to the plurality of radiation feeders and temporarily holds and discharges the articles directly or indirectly supplied from the plurality of radiation feeders;
weight measurement units that each measure a weight of the articles held in a corresponding one of the plurality of hoppers;
an acquisition unit that acquires information on an amount of the articles on the plurality of radiation feeders; and
a controller that selects, out of the plurality of hoppers, a combination of hoppers from which the articles are to be discharged on a basis of the weights measured by the weight measurement units, wherein
the controller specifies, out of the plurality of radiation feeders, a radiation feeder being oversupplied with the articles on a basis of the information acquired by the acquisition unit, and preferentially selects, out of the plurality of hoppers, a hopper corresponding to the specified radiation feeder as a hopper from which the articles are to be discharged.

2. The combination weighing apparatus according to claim 1, further comprising a camera that images a region on the radiation feeders where the articles are conveyed, wherein
the acquisition unit acquires a proportion of an area occupied by the articles in an area of the region as the information on a basis of an image captured by the camera.

3. The combination weighing apparatus according to claim 1 or 2, wherein
the controller specifies a radiation feeder having the proportion exceeding a first threshold as the radiation feeder being oversupplied with the articles.

4. A combination weighing apparatus comprising:
a distribution unit that distributes articles around the distribution unit;
a plurality of radiation feeders that is disposed around the distribution unit and supplies the articles conveyed from the distribution unit to a plurality of hoppers;
the plurality of hoppers that is disposed corresponding to the plurality of radiation feeders and temporarily holds and discharges the articles directly or indirectly supplied from the plurality of radiation feeders;
weight measurement units that each measure a weight of the articles held in a corresponding one of the plurality of hoppers;
an acquisition unit that acquires information on an amount of the articles on the plurality of radiation feeders; and
a controller that selects, out of the plurality of hoppers, a combination of hoppers from which the articles are to be discharged on a basis of the weights measured by the weight measurement units, wherein
the controller specifies, out of the plurality of radiation feeders, a radiation feeder being undersupplied with the articles on a basis of the information acquired by the acquisition unit, and preferentially selects, out of the plurality of hoppers, hoppers other than a hopper corresponding to the specified radiation feeder as hoppers from which the articles are to be discharged.

5. The combination weighing apparatus according to claim 4, further comprising a camera that images a region on the radiation feeders where the articles are conveyed, wherein
the acquisition unit acquires a proportion of an area occupied by the articles in an area of the region as the information on a basis of an image captured by the camera.

6. The combination weighing apparatus according to claim 4 or 5, wherein
the controller specifies a radiation feeder having the proportion lower than a second threshold as the radiation feeder being undersupplied with the articles.
